# EUROPEAN PATENT APPLICATION

(11) **EP 2 364 031 A1**
(43) Date of publication of application: **07.09.2011**
(21) Application number: 10155051.5
(22) Date of filing: 01.03.2010
(51) Int. Cl.: H04N 13/00, H04N 7/26

(54) **Compression coding and compression decoding of video signals**

(71) Applicant: Telefonaktiebolaget L M Ericsson (Publ), 164 83 Stockholm (SE)
(72) Inventor: Jones, Anthony Richard, Southampton, Hampshire SO30 4DA (GB)
(74) Representative: Chisholm, Geoffrey David

(57) **Abstract**

The invention relates to compression coding of two or more video signals and particularly of two stereoscopic video signals in a 3 dimensional television system providing compression coding of a primary video signal and at least one secondary video signal. Primary pictures from the primary video signal and secondary pictures from the secondary video signal are combined to form an intermediate a combined video signal comprising an alternating sequence of pictures from the primary and secondary signal which is then compression coded to form a single compressed bit stream.
The invention also provides a compression decoder and method of compression decoding a compressed bit stream comprising a plurality of compressed video pictures, wherein each of the compressed video pictures is a primary picture from a primary video signal or a secondary picture from one or more secondary video signal(s), the pictures from the primary video signal and the or all of the secondary video signal(s) being in an alternating sequence in picture display order of the received compressed bit steam. The received compressed pictures are identified as primary or secondary pictures and the received compressed pictures are compression decoded dependent upon the identification of the received compressed pictures.

## Description

### TECHNICAL FIELD

The invention relates to the compression coding of video signals, and in particular relates to the compression coding of two or more video signals. The invention is particularly suitable for the compression coding of two stereoscopic video signals for use in 3 dimensional television system (3DTV system).

### BACKGROUND

Compression of video signals for transmission or storage is well known and many different formats are known or are being developed. Compression of video signals is possible because of the significant temporal and spatial redundancy in video signals and the term "compression ratio" refers to the ratio of the number of bits representing the video signal in its compressed form and the number of bits representing the video signal in its uncompressed form.

There is increasing interest in 3DTV systems, and in other systems in which two or more closely related video signals are used. Taking a 3DTV system as an example, two video signals are recorded simultaneously of the same scene, but from a slightly different viewpoint. These two video signals can then be viewed together to create a stereoscopic effect for 3DTV, as will be known to a skilled person.

In systems such as 3DTV systems, two or more associated video signals may need to be compression coded for storage or for transmission. Previously it has been proposed to compression code the video signals using a compression coder for each of the video signals and to transmit the compression coded bit streams in parallel transmission channels. Although this approach has the advantage that conventional compression coders and decoders may be used, there is inefficient use of resources and it can be difficult to ensure that synchronisation of the video signals is maintained.

Previously it has been proposed to compression code number of stereoscopic video signals by treating one of the video signals as the master signal and independently coding the remaining signals differentially with respect to this master signal. This method provides efficient compression coding but requires completely new compression coder and compression decoder design to achieve the differential coding and to ensure the temporal alignment of separately transmitted video signal components. Such a system is not compatible with existing compression codecs.

The present invention seeks to provide a method and apparatus for compression coding at least two video signals, and a method and apparatus for compression decoding a compressed bit stream.

### SUMMARY

According to one aspect of the invention there is provided a method of compression coding a primary video signal and at least one secondary video signal. In a first step of the method primary pictures from the primary video signal are combined with secondary pictures from the secondary video signal(s), to form a combined video signal comprising an alternating sequence of pictures from the primary video signal and from the or each of the secondary video signal(s). In a second step the combined video signal is compression coded to form a single compressed bit stream.

According to a second aspect of the invention there is provided a coder for compression coding a primary video signal and at least one secondary video signal. The coder comprises a combiner for combining primary pictures, from the primary video signal, and secondary pictures, from the secondary video signal(s) to form a combined video signal comprising an alternating sequence of pictures from the primary video signal and from the or each of the secondary video signal(s). The coder also comprises a compression coder arranged to receive the combined video signal from the combiner to compression code the combined video signal to form a single bit stream.

According to a third aspect of the invention there is provided a method of compression decoding a compressed bit stream comprising a plurality of compressed video pictures, wherein each of the compressed video pictures is a primary picture from a primary video signal or a secondary picture from one or more secondary video signal(s), the pictures from the primary video signal and the or all of the secondary video signal(s) being in an alternating sequence in picture display order of the received compressed bit steam. The method of compression decoding comprises the steps of identifying received compressed pictures as a primary picture or a secondary picture. The method of compression decoding also comprises the step of compression decoding received compressed pictures dependent upon the identification of the received compressed picture as a primary picture or a secondary picture.

According to a fourth aspect of the invention there is provided a decoder for compression decoding a compressed bit stream comprising a plurality of compressed video pictures, wherein each of the compressed video pictures is a primary picture from a primary video signal or a secondary picture from one or more secondary video signal(s), the pictures from the primary video signal and the or all of the secondary video signal(s) being in an alternating sequence in picture display order of the received compressed bit stream. The decoder comprises source identifier for identifying received compressed pictures of the received bit stream as primary picture or secondary picture. The decoder also comprises a compression decoder, coupled to the source identifier, for compression decoding received compressed pictures dependent upon the identification of the received compressed picture as a primary picture or a secondary picture

### BRIEF DESCRIPTIONOF THE DRAWINGS

The invention will now be described by way of example with reference to the accompanying drawings:
Figure 1 is a block diagram of the main components of an exemplary prior art video compression coder;
Figure 2 is a block diagram of the main components of an exemplary prior art video compression decoder;
Figure 3 shows exemplary prediction paths for conventional video compression coding;
Figure 4a illustrates the combination of two video signals to form a combined video signal in accordance with a first exemplary embodiment;
Figure 4b shows exemplary prediction paths for compression coding of the combined video signal of Figure 4a;
Figure 5a illustrates the combination of two video signals to form a combined video signal in accordance with a second exemplary embodiment;
Figure 5b shows exemplary prediction paths for compression coding of the combined video signal of Figure 5a;
Figure 6 is a block diagram of the main components of a compression coding system using an exemplary compression coder and an exemplary compression decoder;
Figure 7 is a flow chart showing steps of a method of compression coding in accordance with an exemplary embodiment;
Figure 8 is a flow chart showing steps of a method of compression decoding in accordance with an exemplary embodiment;
Figure 9 is a block diagram showing the main components of a compression coder of an exemplary embodiment;
Figure 10 is a block diagram of the main components of the video signal combiner of the exemplary compression coder shown in Figure 9;
Figure 11 is a block diagram showing the main components of a first exemplary compression decoder; and
Figure 12 is a block diagram showing the main components of a second exemplary compression decoder.

### DETAILED DESCRIPTION

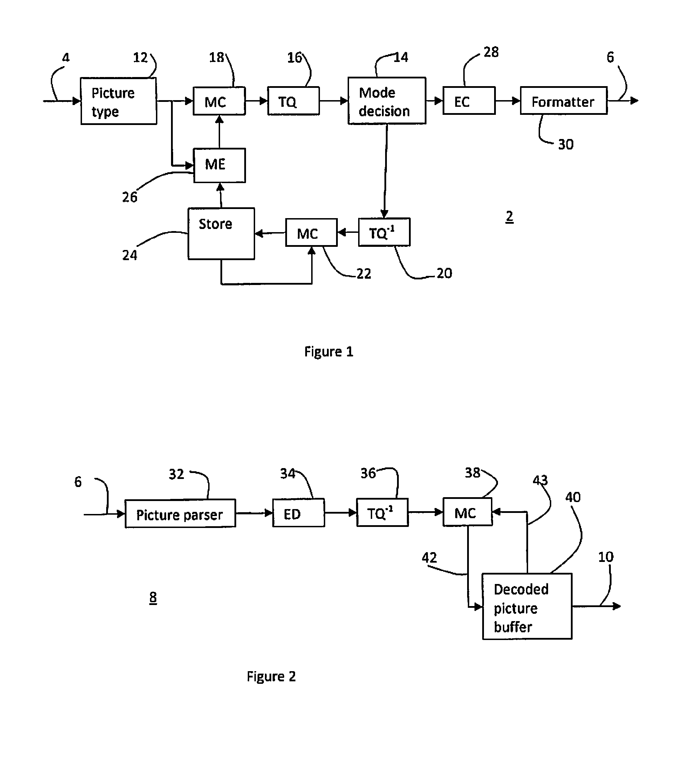

The invention relates to compression coding of video signals. The general principles of compression coding of video signals will now be described with reference to Figures 1-3.

Figure 1 is a block diagram of the main components of an exemplary prior art compression coder 2. The exemplary compression coder 2 compression codes a video signal 4, comprising a stream of video pictures, to produce an output compressed bit stream 6, as will be explained in more detail in the following description.

Figure 2 is a block diagram of the main components of an exemplary prior art compression decoder 8. The exemplary compression decoder 8 compression decodes a compressed bit stream 6 to produce an output compression decoded video signal 10, as will be explained in more detail in the following description.

In general, as will be apparent to a skilled person, the compression decoded video signal 10 is not identical to the original video signal 4 because current and envisaged future compression systems do not offer lossless compression of video signals. However, it has been found that acceptable visual signal quality can be obtained with greater compression ratios than are possible with loss-less compression formats. Compression systems use a variety of different techniques to exploit spatial and temporal similarities within a video picture sequence and to exploit differences in the significance of errors to the way in which a video signal is perceived.

As will be explained in more detail later, each picture of a video signal to be coded may be intra compression coded, in which only picture information of the picture to be coded is used during compression coding, or may be prediction compression coded, in which picture information from one or more reference pictures may be used during compression coding. Typically intra coded pictures may be I type pictures and prediction compression coded pictures may be P type pictures or B type pictures, as will be explained in more detail below.

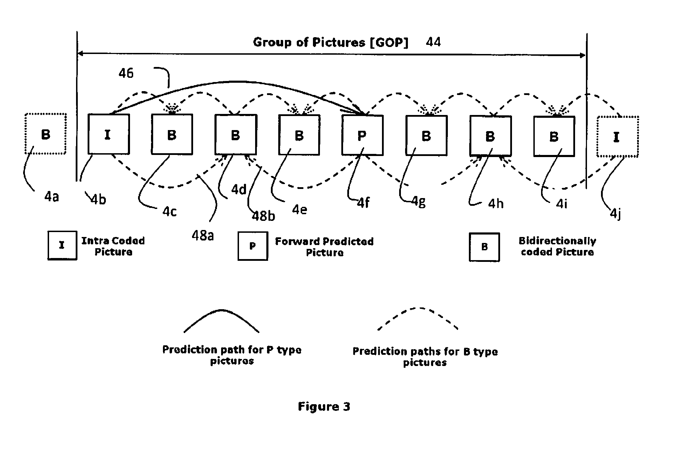

Compression system formats generally employ a Group of Pictures (GOP) approach, which enables temporal similarities between pictures in a video sequence to be exploited to reduce the average number of bits required to compression code a picture, and therefore to reduce the average bit rate of the compression coded bit stream. Before the components of the exemplary compression coder 2 and the exemplary compression decoder 8 are discussed in detail, the use of Groups of Pictures (GOPs) and resulting GOP prediction paths used during compression coding and compression decoding will be discussed with reference to Figure 3.

In the description of the GOP and the associated prediction paths it is assumed that all picture information in each picture of the video signal 4 is coded using the same coding mode as the picture type. As will be discussed in due course, this assumption is not necessarily true.

Figure 3 shows a sequence of pictures 4a-4j of a video signal 4, and an exemplary GOP structure 44 encompassing pictures 4b-4i of the video signal. The principles of compression coding of the pictures 4b-4i will be explained with reference to Figure 3, which shows the prediction paths used during compression coding.

In common compression coding systems the pictures may be frames, having progressively scanned picture information, or field pairs, in which picture information from an interlace field having picture information in all the odd lines is combined with an interlace field having picture information in all the even lines, as will be appreciated by a skilled person.

Picture 4b is labelled as I type picture, representing a picture that is compression coded as an Intra coded picture. The Intra coding mode takes advantage of the spatial redundancy within a single picture to achieve compression of the picture, and provides the least efficient compression coding mode. However, since an intra coded picture is coded independently of any other picture it can be decoded without reference to other pictures. I type pictures are therefore useful at a cut or splice point where video signal source alters, and are also used periodically to prevent picture compression errors becoming too large.

Picture 4f is labelled as a P type picture, representing a picture having picture information that is prediction coded from a previous picture. As shown by prediction path 46, picture information in picture 4f is prediction coded using I type picture 4b as the reference picture. This means that, during compression coding, picture information within the P type picture 4f is compared with picture information within a reference picture, in this case I picture 4e, and information relating to the differences between the pictures is sent, as will be explained in more detail below with reference to Figures 1 and 2. Since the picture information in one picture is similar to picture information in nearby pictures, fewer bits are required to sent the difference information than would be required to send the original picture information.

Pictures 4c-4e and 4g-4i are each labelled as a B type picture, representing a bi-direction prediction coded picture, having picture information that is prediction coded from previous and future reference pictures. Thus for example, as shown by prediction paths 48a, 48b, picture information within the B type picture 4d is compared with picture information from reference pictures 4b and 4f. In general, the difference between picture information in a B type picture and picture information from the reference picture will be small and thus B type compression coding will result in the most efficient compression.

In the following description motion compensation is applied during the comparison between picture information to be coded and reference picture information, since motion compensated compression coding is recognised to give better compression ratios. However, the use of motion compensation is not necessary.

Pictures 4b-4i of the video signal 4 form a group of pictures GOP 44 as shown. A group of pictures has an associated I type picture, and may have one or more further pictures coded as P type pictures and/or as B type pictures, as will be known to a skilled person. Although it is possible to have a GOP containing only one, I encoded, picture, typically a GOP will have a number of differentially coded pictures such as P pictures or B pictures since these picture coding types provide increased compression compared with Intra coding. The trend is generally to use longer GOP structures in compression systems in order to reduce the average number of bits required to compression code a picture.

As will be appreciated by a skilled person the illustrated GOP structure is merely exemplary, and different GOP structures may be used.

As indicated above, each picture of the video signal is designated as I picture type, a P picture type or a B picture type. Typically during compression coding the picture information of a picture is divided into smaller portions, and the picture information of the smaller portions is sequentially compression coded in order to obtain the resulting compression coded bit stream for the whole picture.

For example in known compression formats such as the MPEG-2 compression format and H.264 compression format, the picture information unit on which compression coding is performed is a macro-block, made up of four 8x8 pixel blocks of luminance information and the corresponding single 8x8 block of blue colour difference information and corresponding single 8x8 block of red colour difference information. Thus in these compression coding formats the compressed bit stream is formed by carrying out compression coding on successive macro-blocks within a horizontal slice of the picture, and then for successive slices within the picture. The following description assumes that the compression coding is applied on a macro-block by macro-block basis.

In existing compression systems it is noted that different coding modes (I, P or B coding modes) may be applied to different macro-blocks within a single picture. The mode of compression coding of a macro-blocks within a picture may be the same as the picture type allocated to that picture, or may be selected to be of a lower order picture type. Generally, macro-blocks within I type pictures must be I-mode compression coded; macro-blocks within a P type picture may be P-mode compression coded or may be I-mode compression coded; and macro-blocks within a B-type picture may be any of I-mode compression coded, P-mode compression coded or B-mode compression coded. Generally, the mode of compression used for compression coding of a macro block of a P type or B type picture is selected depend upon which compression mode, of the compression modes available depending upon the allocated picture type, results in the least bits for the compression coded bit stream.

Figure 1 shows a compression coder 2 for compression coding an input video signal 4 to generate a compressed bit stream 6.

The compression coder 2 comprises a picture type decision block 12, for determining a picture type for each picture, and a mode decision block 14 for making a coding mode decision for each of the macro blocks within each picture. A transform and quantise block TQ 16 is coupled between the picture type decision block 12 and the mode decision block 14 and operates to transform picture information from the spatial domain to the frequency domain, typically using a discrete cosine transform (DCT), and to quantise the resulting frequency coefficients.

In order to allow motion compensated prediction compression coding, the compression coder 2 also has a motion compensator block 18 coupled between the picture type decision block 12 and the transform and quantise block TQ 16. The motion compensator block 18 provides motion compensated comparison of the input picture information with reference picture information.

The reference picture information used for the motion compensated coding of P-mode macro-blocks and B-mode macro-blocks must be picture information available to a decoder, and the compression coder therefore incorporates compression decoder elements. An inverse transform and quantise block TQ⁻¹ 20, coupled to receive the quantised frequency coefficients generated by the transform and quantise block TQ 16 and arranged to transform the quantised frequency coefficients back to the spatial domain to provide decoded picture information, for example using an inverse discrete cosine transform (inverse DCT). The inverse transform and quantise block TQ⁻¹ 20 is arranged to provide the decoded picture information to a second motion compensator block 22 which is in turn coupled to a store 24 for storing decoded pictures. Decoded picture information for an I-mode macro block may be stored directly in the decoded picture store 24. Where the decoded picture information is decoded picture difference information for a P-mode macro block or a B mode macro block, the second motion compensator 22 is arranged to generate motion compensated decoded picture information by combining the decoded picture difference information with reference picture information from the store 24, and to store the decoded picture information in the store 24. Thus, the store 24 will contain decoded versions of previous pictures of the video signal 4.

A motion estimation block ME 26 is coupled to the store 24 and the picture type decision block 12 and determines the relative motion between picture information in the picture to be coded and picture information in one or more of the decoded reference pictures stored in store 24. The relative motion between the position of the macro block in the picture being coded and the picture information block in the reference picture having the smallest picture information difference result is generally represented by a motion vector.

The motion estimation block ME 26 provides the motion compensation block MC 18 with motion vectors representing the relative displacement between the picture information of an input picture and the best match picture information of one or more reference pictures stored in store 24. The motion compensation block uses the picture information from reference pictures stored in store 24 and the motion vectors supplied by the motion estimation block ME 26 to enable motion compensated comparison of the input picture information with reference picture information during compression coding of P-type or B-type macro blocks.

An entropy coder EC 28 is coupled to the transform and quantise block TQ 16 via the mode decision block 14 to receive quantised frequency coefficients representing picture information or the quantised frequency coefficients representing picture difference information, selected by the mode decision block 14. The entropy coder EC 28 applies entropy coding to the quantised frequency coefficients. For example the quantised frequency coefficients may be entropy coded in entropy coder EC 28 by being scanned in a zigzag pattern and run-length encoded using a variable-length coding scheme such as Huffman coding which uses shorter codes for commonly occurring pairs and longer codes for less commonly occurring pairs.

The entropy coder 28 is coupled to a formatter 30 and the codes resulting from the entropy coding are passed to the formatter 30. The formatter 30 creates the output bit stream 6 from the codes received from the entropy coder, together with the corresponding motion vectors and reference picture information for P type pictures and B type pictures, and additional formatting information as necessary.

During operation of the compression coder, in order to compression code a macro block as an I mode macro block, the picture information of the macro block is passed to the transform and quantise block TQ 16 and the resulting quantised frequency coefficients representing the macro block picture information can be passed to the entropy coder EC 28 as mentioned above.

During operation of the compression coder in order to compression code a macro block as a P-mode macro block, firstly the relative motion between the macro block and the reference picture must be estimated for that macro-block. Typically this is achieved in the motion estimator ME 26 by determining a motion vector for the macro-block representing the offset between the macro-block position in the picture to be coded and the position of the best match to the picture information of the macro-block within the reference picture. The motion vectors for the macro-blocks may be obtained using a number of different techniques which will be known to a skilled person and will not be discussed in more detail herein. The picture information in the reference picture identified by the motion vector associated with the macro block is compared with the picture information of the macro block in the motion compensator block 18 to establish picture difference information. This picture difference information for the macro block is passed to the transform and quantise block TQ 16 and the resulting quantised frequency coefficients representing the macro block picture information can be passed to the entropy coder EC 28 as mentioned above.

The operation of the compression coder in order to compression code a macro block as a B-mode macro block, is very similar to that carried out to compression code a macro block as a P-mode macro block. In one arrangement during compression coding of a macro block as a B-mode macro block, firstly the relative motion between the macro block and each of the reference pictures is estimated. Typically this is achieved in the motion estimator ME 26 by determining motion vectors for the macro block representing the offset between the macro block position in the picture to be coded and the position of the best match to the picture information of the macro-block within the reference pictures. As before, the motion vectors for the macro-blocks may be obtained using a number of different techniques which will be known to a skilled person and will not be discussed in more detail herein. The motion compensated blocks are then combined to form the reference picture information for use in the prediction coding, and then compared with the picture information of the macro block in the motion compensator block 18 to establish picture difference information. This picture difference information for the macro block is passed to the transform and quantise block TQ 16 and the resulting quantised frequency coefficients representing the macro block picture information can be passed to the entropy coder EC 28 as mentioned above.

During operation of the compression coder 2 shown in Figure 1, each picture of the video signal 4 to be coded is allocated a picture type as I type picture, a P type picture of a B type picture.

All macro-blocks of an I type picture are coded as I-mode compression, and the picture information for each macro-block in turn is I mode coded as described above.

Macro-blocks of a P type picture may be coded using an I-mode compression or using P-mode compression. Therefore typically the mode decision block 14 arranges for the macro block to be compression coded using both I-mode compression and P-mode compression, and selects the compression mode resulting in the better compression.

Finally, the macro-blocks of a B type picture may be coded using an I-mode compression or using P-mode compression or using B mode compression. Therefore typically the mode decision block 14 arranges for the picture information of the macro block to be compression coded using both I-mode compression and P-mode compression, and selects the compression mode resulting in the better compression.

An exemplary compression decoder 8 is shown in Figure 2.

The exemplary compression decoder 8 comprises a picture parser 32 coupled to receive the compressed bit stream 6; an entropy decoder ED 34 coupled to the picture parser 32 to receive successive portions of the compressed bit stream from the picture parser 32; an inverse transform block TQ⁻¹ 36 coupled to the entropy decoder 34; a motion compensator 38; and a decoded picture buffer 40, from which the compression decoded video signal 10 may be read out.

In operation of the compression decoder 8, the picture parser 32 receives the compression coded bit stream 6 and identifies boundaries between consecutive pictures, and between slices and between macro-blocks of each of the pictures, within the received bit stream based on start codes and formatting information in the bit stream, as will be known to a skilled person. For each picture, the bit stream associated with each successive macro-block is passed in turn to the entropy decoder 34. The entropy decoder 34 receives the bit stream for each macro-block in turn and performs the reverse function from the entropy coder EC 28 to decode the variable length coding and recover the frequency coefficients. The frequency coefficients are passed to the inverse DCT transform function TQ⁻¹ 36 and are transformed from the frequency domain back to the spatial domain. The decoded picture information for the macro-block is passed to the motion compensator 38 together with the associated motion vectors, if applicable.

For I-coded macro-blocks the picture information for the macro-block has now been recovered and no motion compensation is required. The decoded picture information for the macro-block can be stored in the decoded picture buffer as macro-block picture information 42.

For a P- coded or B-coded macro-block the picture difference information for the macro-block has now been recovered. The motion compensator 38 uses the motion vectors associated with the macro-block to identify reference picture information 43 in reference pictures already stored in the decoded picture buffer 40. This reference picture information 43 can be read out from the decoded picture buffer 40 by the motion compensator 38, and then added to the decoded picture difference information generated by the inverse DCT transform function TQ⁻¹ 36 to obtain the picture information 42 for that macro-block. The picture information 42 for the macro-block may then be stored in the decoded picture buffer 40.

As will be appreciated, the received bit stream picture order may not be the same as the video signal picture order, because of the requirement that a reference picture must be received prior to any picture coded with reference to it. The decoded pictures of the decoded video signal 10 can be read out in picture order from the decoded picture buffer.

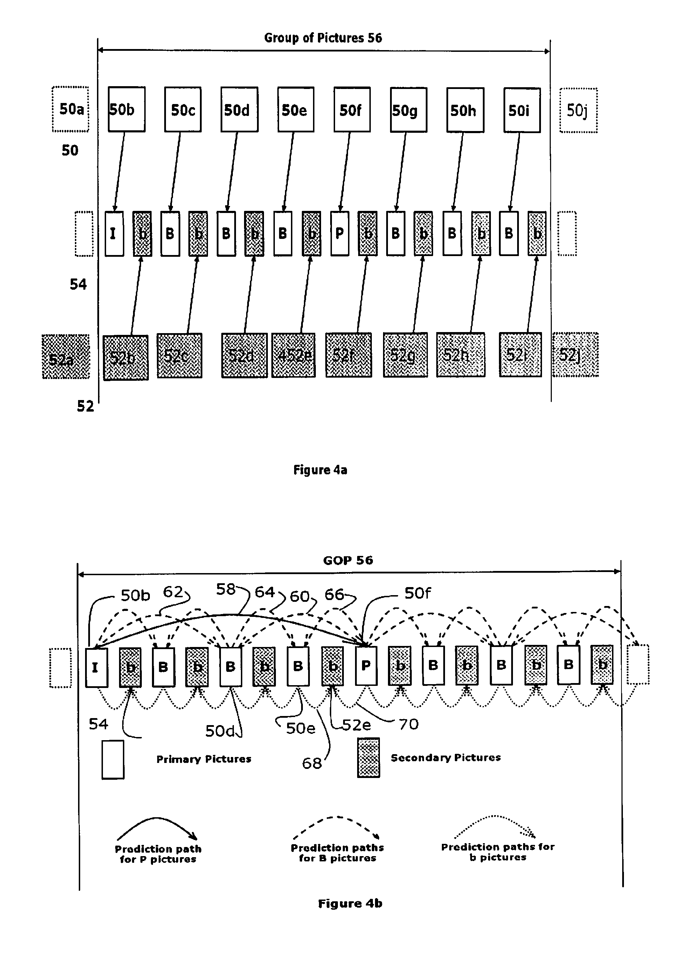

Exemplary embodiments will now be explained with reference to Figure 4a- Figure 11.

The exemplary embodiments relate to the compression coding and compression decoding of two video signals within the context of a 3DTV system in which two separate video signals are recorded of the same scene, for example at slightly different angles. In the exemplary embodiments one video signal is designated as a primary video signal and the other video signal is designated as a secondary video signal. In the exemplary embodiments the primary video signal and the secondary video signal are combined to form an intermediate combined video signal, and the combined video signal is compression coded to form a single bit stream.

The combination of the primary video signal and the secondary video signal to form an intermediate combined video signal for compression coding, and the exemplary GOP structure 56 resulting from the application of the exemplary embodiment to the compression coding of the combined video signal 54 in accordance with a second embodiment will now be explained with reference to Figures 4a and 4b.

In Figure 4a a primary video signal 50 comprises a plurality of primary pictures 50a-50j, and a secondary video signal 52 comprises a plurality of secondary pictures 52a-52j.

As will be known to a skilled person, a video signal may either be a frame, which has picture information in all lines, or a field, which has picture information only on alternate lines. The term "top field" will be used in this description to refer to a field having picture information only on odd-numbered lines and the term "bottom field" will be used in this description to refer to a field having picture information only on even-numbered lines. Pairs of adjacent top and bottom fields may be combined to form a field pair having picture information on all lines.

In the first exemplary embodiment the primary pictures 50a-50j and the secondary pictures 52a-52j may be either video signal frames or may be field pairs formed from the video signal fields, and contain picture information on all lines of the picture.

In the first exemplary embodiment, primary pictures 50a-50j and secondary pictures 52a-52j are alternated or interleaved to form a combined video signal 54, as shown in Figure 4a, and compression coding is carried out on the combined video signal 54 to generate a single compressed bit stream in accordance with the first embodiment. Compression coding is applied to combined video signal 54 in the first exemplary embodiment using the GOP structure 56 as shown in Figure 4b.

The compression coding applied to the combined signal 54 shown in Figure 4a will be explained with reference to Figure 4b. An exemplary GOP 56 structure for the combined video signal 54 and exemplary prediction paths are shown in Figure 4b. The GOP 56 structure shown in Figure 4b is merely exemplary and different GOP structures may be used in different embodiments.

Compression coding is applied to the combined video signal 54, which is made up of primary pictures alternating with secondary pictures. Compression coding is applied using a GOP 56 having both primary pictures and secondary pictures.

As can be seen in Figure 4b, the following picture type allocations are made in the exemplary GOP 56:
primary picture 50b is compression coded as I type picture;
primary picture 50f is compression coded as a P type picture, with primary picture 50b used as the reference picture as indicated by prediction path 58;
primary picture 50d is compression coded as a B type picture, with primary pictures 50f and 50b used as the reference pictures, as indicated by prediction paths 60 and 62 respectively;
primary picture 50e is compression coded as a B type picture, with primary pictures 50d and 50f used as reference pictures, as indicated by prediction paths 64 and 66 respectively; and
secondary picture 52e is compression coded as a b type picture, with primary pictures 50e and 50f used as reference pictures, as indicated by prediction paths 68 and 70, respectively.

The term "b type picture" is used to denote a picture that is bi-directionally coded in the same way as a B type picture, but does not itself serve as a reference picture for any other picture.

The above are a representative sample of the picture type allocations and resulting prediction paths used for compression coding shown in Figure 4b and the remaining picture type allocations and resulting prediction paths used for compression coding will be apparent to a skilled person from a consideration of Figure 4b and therefore will not be discussed in further detail.

In the exemplary GOP 56 structure resulting from the application of the exemplary embodiment to the compression coding of the combined video signal 54, each primary picture is compression coded without reference to a secondary picture. In the exemplary embodiment this means that the primary pictures are compression coded either as I type pictures or that only primary pictures are used as the reference pictures for compression coding of a primary picture as a P type picture or as a B type picture. Although in the exemplary embodiment the primary pictures are all used as reference pictures for other primary pictures and/or for secondary pictures, it is possible to envisage GOP structures in which not all primary pictures are reference pictures.

In the exemplary GOP 56 structure resulting from the application of the exemplary embodiment to the compression coding of the combined video signal 54, each secondary picture is compression coded using primary pictures as reference pictures. Specifically in the exemplary embodiment, each secondary picture is compression coded as a b type picture using adjacent primary pictures as reference pictures.

It is to be expected that in embodiments where the primary video signal and the secondary video signal are similar, such as in stereoscopic or 3DTV embodiments, there will be a high degree of similarity between the primary video signal and the secondary signal and compression coding a secondary picture using only primary pictures as reference pictures will result in a satisfactory compression ratio.

In other embodiments secondary pictures may be compression coded using at least one other secondary picture as a reference picture.

It should be noted that although in the exemplary embodiment each picture is coded with reference to a maximum of two reference pictures, in some embodiments more than two reference pictures may be used during compression coding of a picture.

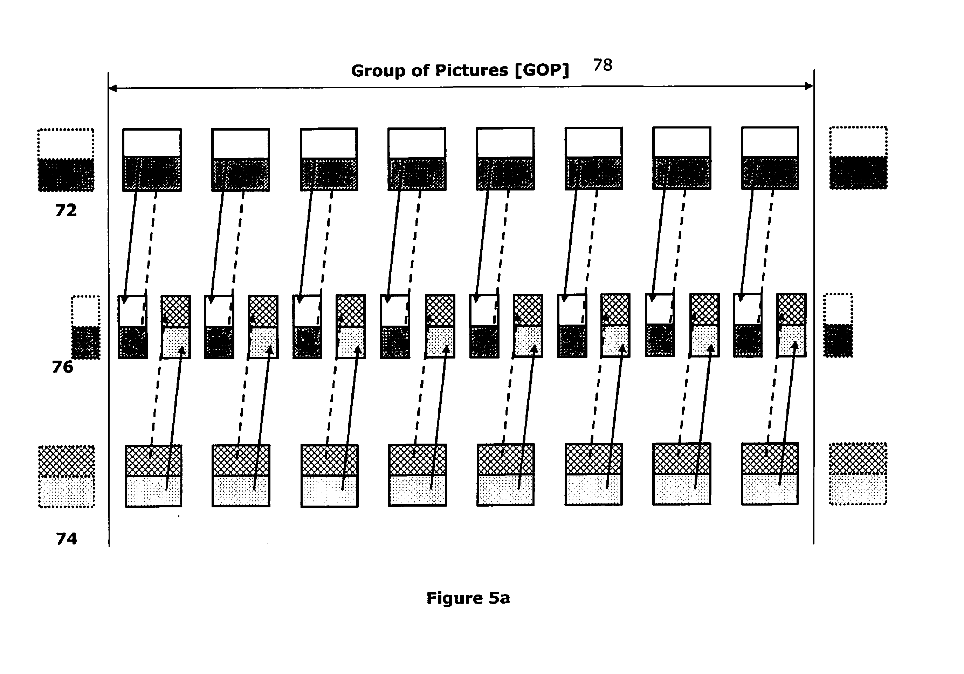

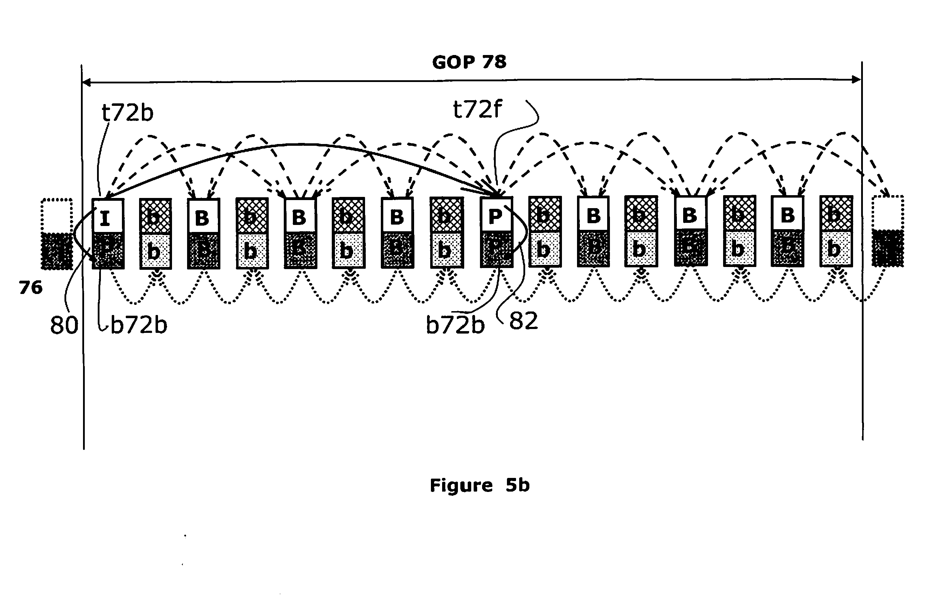

The combination of the primary video signal and the secondary video signal to form an intermediate combined video signal for compression coding, and the exemplary GOP structure resulting from the application of the exemplary embodiment to the compression coding of the combined video signal in accordance with a second embodiment, will now be explained with reference to Figures 5a and 5b.

In some compression systems, it is possible to compress the fields of a field pair differently from one another. This approach takes advantage of the fact that in the original video signal the two fields of a field pair are captured at different times, and therefore the picture information in one of the fields, typically the field occurring later in the original video signal, may be predicted from the other, typically the earlier occurring field in the original video signal. Thus for example, in some embodiments a bottom field in a field pair may be predictively coded from the top field of that field pair. The temporal redundancy of the video signal can then be exploited to reduce the number of bits required to compression code the field pair.

Figure 5a illustrates the combination of a primary video signal comprising field pairs and a secondary video signal comprising field pairs into a combined video signal, and Figure 5b shows an exemplary GOP structure and prediction paths for such a combined video signal resulting from an application of a second exemplary embodiment.

In Figure 5a a primary video signal 72 comprises a plurality of primary pictures, and a secondary video signal 74 comprises a plurality of secondary pictures. The primary video signal 72 and the secondary video signal 74 in this embodiment are interlaced video signals and the primary pictures and the secondary pictures are field pairs having respective top and bottom fields, which are depicted figuratively using a split box for each of the primary pictures and secondary pictures in Figure 5a. As mentioned above, in this description, the term "top field" refers to a field having picture information only on odd lines; and in this description the term "bottom field" refers to a field having picture information only on even lines.

Since the primary video signal 72, secondary video signal 74, and combined video signal substantially correspond to the primary video signal 50, secondary video signal 52 and combined video signal 54 described above with reference to Figures 4a and 4b, further identification of the individual pictures has been omitted from Figures 5a and 5b for clarity.

A single combined video signal 76 is formed by alternating pictures from the primary pictures video signal 72 and the secondary video signal 74 as shown in Figure 5a, in a similar manner to the formation of the combined video signal 54 from the primary video signal 50 and the secondary video signal 52, as described above with reference to Figure 4a. The combined video signal 76 is then compression coded to form a single compressed bit stream.

The compression coding applied to the combined signal 76 shown in Figure 5a will now be explained with reference to Figure 5b, which shows an exemplary GOP structure 78 for the combined video signal 76 and exemplary prediction paths. Once again, the GOP structure 78 shown in Figure 5b is merely exemplary and different GOP structures may result from different embodiments.

Since the picture type allocated to the pictures of the combined video signal 76 and inter-picture prediction paths shown in Figure 5b corresponds with the picture type allocated to the pictures of the combined video signal 54 and inter-picture prediction paths shown in Figure 4b, further discussion of the picture type and prediction paths used for the compression coding will be omitted for clarity.

Additionally, in the exemplary embodiment in at least some field pairs of the combined video signal 76, the bottom field of a field pair is compression coded with reference to the top field of that field pair. In the embodiment shown in Figure 5b, a primary bottom field b72b is prediction coded from its corresponding top field t72b, as can be seen from prediction path 80 and primary bottom field b72f is prediction coded from its corresponding top field b72f, as can be seen from prediction path 82.

In the exemplary embodiment inter-field pair prediction is used only for field pairs t72b/b72b and t72f/b72f, since it is expected that the increased compression efficiencies possible with the use of intra-field prediction will have the most effect in the I type picture and the P type pictures. In other embodiments inter-field pair prediction may be used on as many primary or secondary field pairs as selected by a skilled person.

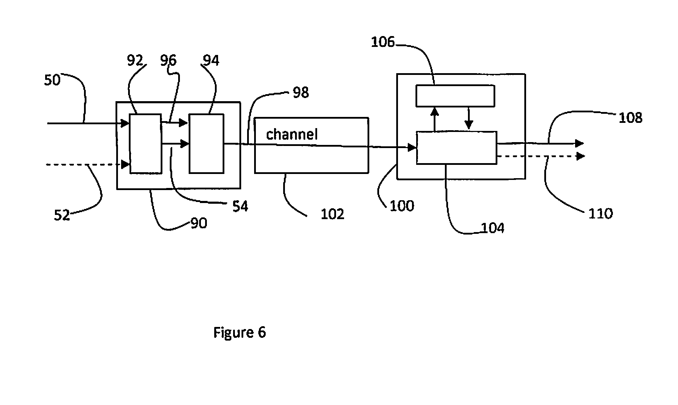

A coder 90 in accordance with an exemplary embodiment and a decoder 100 in accordance with an exemplary embodiment are shown within an exemplary coding system in Figure 6. The coding system of Figure 6 shows the compression coding of two video signal inputs: however, as discussed above and as will be apparent to a skilled person, in other embodiments more than two video inputs may be compression coded.

In the coding system shown in Figure 6 the exemplary coder 90 and the exemplary decoder 100 are coupled by a conventional transmission channel 102.

The coder 90 has a combiner 92 and a compression coder 94. The combiner 92 is arranged to receive input video signals 50, 52. The combiner 92 is coupled to the compression coder 94 to supply a combined video signal 54 and picture source identification 96 to the compression coder 94. The compression coder 90 is arranged to output a single compressed bit stream 98.

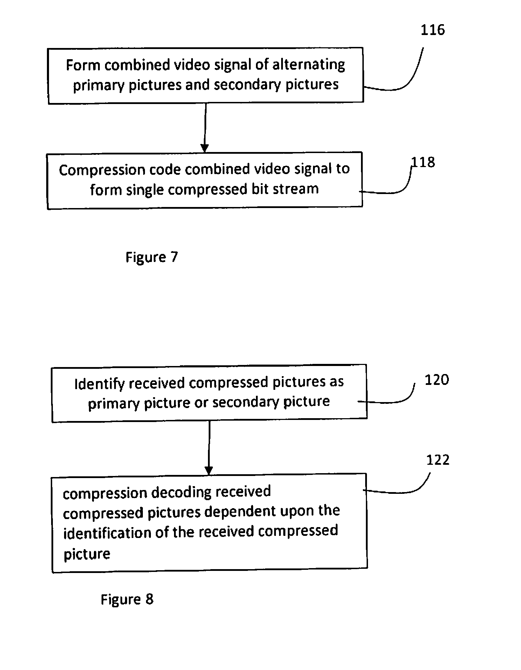

An exemplary method of compression coding is shown in Figure 7. In a first step of the exemplary method of compression coding shown in Figure 7, step 116, a combined video signal 54 of alternating primary pictures and secondary pictures is formed. In a second step of the exemplary method of compression coding, step 118, the combined video signal is compression coded to form a compressed bit stream. The exemplary method of compression coding may be implemented in the coder 90 shown in Figure 6, 9 and 10.

The compressed bit stream 98 is transmitted to the exemplary compression decoder 100 via the conventional transmission channel 102.

The exemplary decoder 100 is provided with a compression decoder 104 and a source identifier 106. The compression decoder 104 is arranged to receive a single compressed bit stream 98 having alternating primary and secondary pictures in the display order of the pictures and is bi-directionally coupled (108, 110) to the source identifier 106. The compression decoder 104 is arranged to compression decode compressed pictures of the received single bit stream, and outputs a primary video signal 108 in some embodiments, or a primary video signal 108 and a secondary video signal 110 in other embodiments.

An exemplary method of compression decoding a compressed bit stream 98, comprising a plurality of compressed video pictures, wherein each of the compressed video pictures is a primary picture from a primary video signal or a secondary picture from one or more secondary video signal(s), the pictures from the primary video signal and the or all of the secondary video signal(s) being in an alternating sequence in picture display order of the received compressed bit stream, in accordance with one embodiment is shown in Figure 8.

In a first step of the exemplary method of compression decoding, step 120, the primary or secondary source of received compressed pictures is identified. In a second step of the exemplary method of compression decoding, step 122, received compressed pictures are compression decoded dependent on identification of received compressed picture. In some embodiments picture source identity information is obtained from the compressed bit stream. The exemplary method of compression decoding may be implemented in the exemplary compression decoder 100 shown in Figures 6, 11 and 12.

In one exemplary embodiment, the compression decoder 100 decodes both the primary picture stream and the secondary picture stream to output a compression decoded primary video signal 108 and a compression decoded secondary video signal 110. In another exemplary embodiment the compression decoder 100 decodes only the primary picture stream from the received compressed bit stream, and outputs only the compression decoded primary video signal 108.

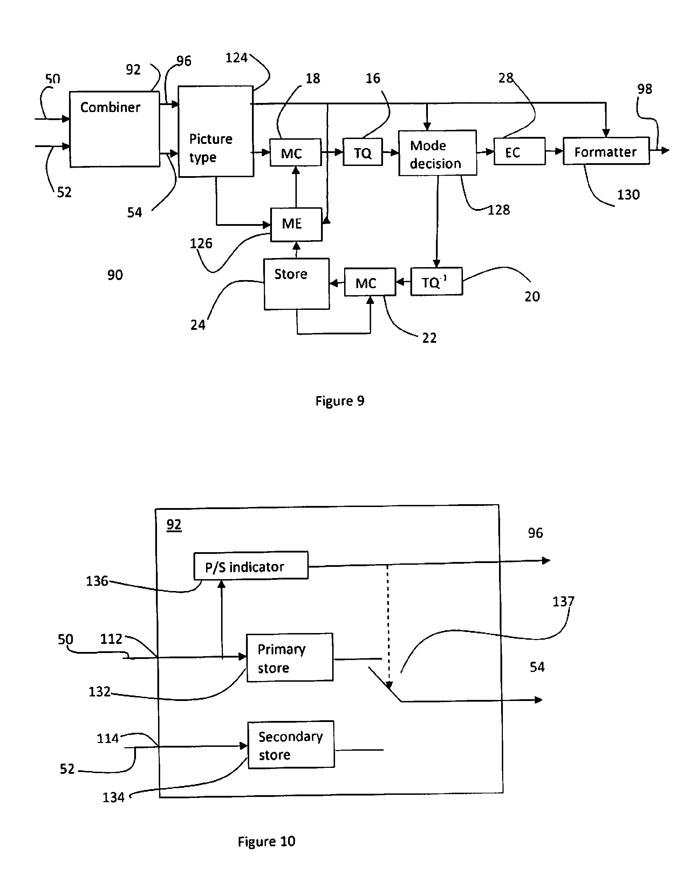

The compression coder 90 for compression coding video signals in accordance with an exemplary embodiment will now be described in more detail with reference to Figures 9 and 10. Figure 9 is a block diagram of the exemplary compression coder and Figure 10 is a block diagram of exemplary frame inter-leaver of Figure 9.

As shown in Figure 9, in the exemplary embodiment the compression coder comprises a combiner 92, which will be described in more detail with reference to Figure 10 and compression coder 94.

As shown in Figure 10, in the exemplary embodiment the combiner 92 is a frame inter-leaver having a primary video signal input 112 and a secondary video signal input 114. The primary video signal input 112 and the secondary video signal input 114 are coupled respectively to a primary video signal store 132 and to a secondary video signal store 134. The frame inter-leaver 92 is also provided with a switch 137 having its inputs coupled to the primary video signal store 132 and to the secondary signal store 134, and its output coupled to the input of the compression coder. The frame inter-leaver also has a primary/secondary source indicator 136 coupled to control the switch 137, and to output a picture source identification 96 corresponding to the primary or secondary source of the picture being output. As can be seen from Figure 9, the picture source identification 96 is coupled to the picture type decision block 124; and, via the picture type decision block 124, to the mode decision function 128; motion estimation block ME 126; and a format function 130 of the compression coder 94 in the exemplary embodiment.

As will be known to a skilled person, the order of pictures in the video signal may be reordered from the picture display order to a compression coding order, so as to ensure that reference pictures are available to the motion estimation block ME 126. This re-ordering from the received picture display ordering to the ordering for compression coding is typically carried out by the picture type decision block 124, and a corresponding re-ordering of the picture source indication supplied to the mode decision function 128; motion estimation block ME 126; and a format function 130 of the compression coder 94 is also carried out by the picture type decision block 124 as necessary.

The compression coder 94 comprises: a picture type decision block 124; a mode decision function 128; a transform and quantise block TQ 16 ; a motion compensator block 18; inverse transform and quantise block TQ⁻¹ 20; second motion compensator 22; store 24; a motion estimation block ME 126; an entropy coder 28; and a formatter function 130.

Components of the compression coder that are the same or similar to the components of the compression coder shown in Figure 1 have been given the same reference numerals. These components are arranged in the same way as in the coder shown in Figure 1 and operate substantially in the same way as corresponding components in Figure 1.

The picture type decision element124; mode decision element 128, motion estimator block ME 126 and formatter 110 in the exemplary embodiment of the coder 90 shown in Figure 9 correspond in their basic functions with the corresponding blocks shown in Figure 1. However, in the exemplary embodiment each of these function blocks is arranged to receive a picture source identification 96 from the combiner 92, and the operation of the function block is adapted depending on the received picture source identification 96. In this way, in the exemplary embodiment the picture source indication 96 for a picture is used in determining the compression coding applied to the picture.

In the exemplary embodiment the picture source indication 96 for a picture is used in determining the picture type allocated to the picture for compression coding. In addition in the exemplary embodiment the picture source indication 96 for a picture may be used in a step of determining the reference pictures selected for motion-compensated compression coding of a prediction coded picture.

Thus, in the exemplary embodiment the operation of the picture type decision element124 is adapted such that pictures identified by the picture source identification 96 as primary pictures are compression coded without reference to pictures identified by the picture source indication 96 as secondary pictures. The primary pictures could therefore be allocated only I picture type, or a prediction picture type in which only primary pictures are selected as reference pictures.

In some embodiments the operation of the picture type decision element124 is adapted such that pictures identified by the picture source identification 96 as secondary pictures are only prediction coded. In some embodiments the picture type decision element 124 may be adapted so that only primary pictures are selected as reference pictures for secondary pictures.

In the exemplary embodiment of the coder 90 shown in Figure 9 the picture source indication 96 is supplied to mode decision element 128. The picture source indication 96 for a picture is used by the mode decision element 128 in determining the compression mode of at least a portion of the picture, for example a macro block. The picture source indication 96 may be used, for example, to bias the mode decision made by the mode decision element 128 for secondary pictures to have a greater tendency to make the same macro block compression mode choices as the corresponding primary picture, for example, and/or to discourage the selection of I-mode coding of macro blocks in pictures identified as secondary pictures.

In the exemplary embodiment of the coder 90 shown in Figure 9 the picture source indication 96 is supplied to motion estimator block ME 126. The picture source indication 96 for a picture is used by the motion estimator block ME 126 to select motion vectors for motion-compensated compression coding of at least a portion of a picture, for example a macro-block. The motion estimator block ME 126 is therefore better able to ensure consistency of motion vector selection between primary pictures and secondary pictures within the combined video signal 54. It is noted that the picture source indication 96 is also used to control the selection of pictures used as reference pictures. For example primary pictures use only primary pictures as reference pictures. Furthermore, in some embodiments the picture source indication 96 may be used to make it more likely that temporally paired frames or field pairs are used as reference pictures for secondary pictures.

In the exemplary embodiment of the coder 90 shown in Figure 9 the picture source indication 96 is supplied to formatter 130. The formatter 130 uses the picture source indication 96 to insert a picture source identity for each compressed picture, indicating whether a compressed picture is a primary picture or a secondary picture, in the single compressed bit stream 98. In some embodiments, an explicit picture source identity is not incorporated in the compressed bit stream. In these embodiments the decoder can identify primary and secondary pictures using other information, for example information relating to picture type or reference pictures selected for a picture.

In operation, a primary video signal 50 is received at the primary video signal input 112 and a primary picture stream is stored in the primary video signal store 132. A secondary video signal 52 is received at the secondary video signal input 114 and a secondary video picture stream is stored in the secondary video signal store 134. The switch 137, under the control of the primary/secondary source indicator 136 reads a picture alternately from the primary video signal store 132 and from the secondary video signal store 134 to output a combined video signal 54 having alternate primary pictures and secondary pictures together with a corresponding picture source indication 96. As will be apparent to a skilled person, in the exemplary embodiment the picture rate of the combined video signal picture stream will be twice the picture rate of the primary video signal or the secondary video signal.

The combined video signal picture stream 54 and picture source indication 96 are supplied to the compression coder 94 for compression coding. In the exemplary embodiment the compression coding carried out on a picture of the picture stream is dependent on whether the picture is a primary picture or a secondary picture.

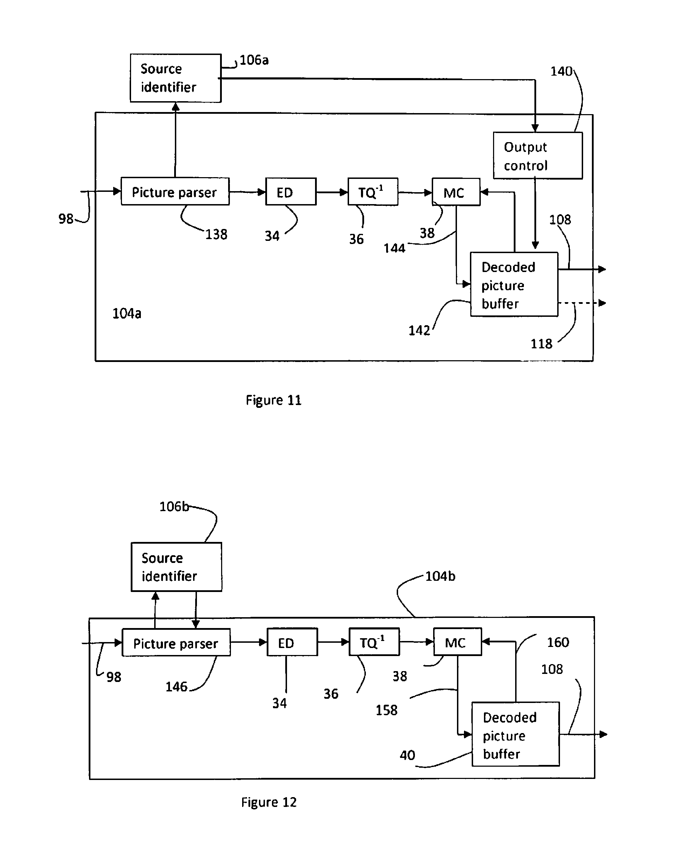

A first embodiment of a decoder 100 for compression decoding a received bit stream will now be described in more detail with reference to Figure 11.

As shown in Figure 11, the first exemplary embodiment of a decoder 100 has a compression decoder 104a and a source identifier 106a. This embodiment of decoder 100 is suitable for use where both the primary video signal and the secondary video signal are to be decoded from the bit stream 98.

As can be seen from Figure 11, the compression decoder 104a comprises a picture parser 138; an entropy decoder ED 34 coupled to the picture parser 138 to receive successive portions of the compressed bit stream from the picture parser 138; an inverse transform block TQ⁻¹ 36 coupled to the entropy decoder 34; a motion compensator 38; and a decoded picture buffer 142. The compression decoder 104a also has buffer output control 140 for controlling the reading out of decoded video signals from the decoded picture buffer 142. The decoder 100 also has a source identifier 106b coupled to receive information from the picture parser 138, and coupled to the output buffer control 140 to provide the output buffer control 140 with primary/secondary source information.

Components of the compression decoder that are the same or similar to the components of the compression coder shown in Figure 2 have been given the same reference numerals. These components are arranged in the same way as in the coder shown in Figure 2 and operate substantially in the same way as corresponding components in Figure 2.

The picture parser 138 and the decoded picture buffer 142 in the first exemplary embodiment of the decoder 100 shown in Figure 11 correspond in their basic functions with the corresponding blocks shown in Figure 2.

However, as the bit stream 98 is received by picture parser 138 and segmented into portions relating to each picture prior to compression decoding, information relating to whether the received compressed picture is a primary picture or a secondary picture is passed by the picture parser 138 to the source identifier 106a.

In some embodiments, the information relating to whether the received compressed picture is a primary picture or a secondary picture can be provided by the picture source identity inserted in the single compressed bit stream by the formatter function 130 of the coder 90. In other embodiments in which the single compressed bit stream does not contain any explicit indication of primary or secondary picture source, the picture parser 138 can inform the source identifier of, for example, the picture types of the received compressed pictures. In embodiments such as illustrated in Figure 4b where primary pictures are coded without reference to secondary pictures, or all the secondary pictures are b type pictures, the source identifier 106a is able to identify primary pictures and secondary pictures from the pattern of picture types and/or from the reference pictures used for each prediction coded picture in the received compressed video signal.

The picture parser 138 passes the partitioned compressed picture bit stream information to the entropy decoder ED 34 and all the compressed pictures are decoded using standard techniques. Since the compressed bit stream 98 was originally compression coded from a single combined video signal, the compressed bit stream may be decoded using conventional techniques, and the resulting decoded pictures 148 are stored in the decoded picture buffer 142.

The output buffer control function 140 receives information from the source identifier that enables the output buffer control function 140 to identify and to read out the primary decoded pictures from the decoded picture buffer 142 as a decoded primary video signal 108, and to identify and to read out the secondary decoded pictures from the decoded picture buffer 142 as a decoded secondary video signal 110.

A second embodiment of a compression decoder 100 for compression decoding a received bit stream 98 will now be described in more detail with reference to Figure 12.

As shown in Figure 12, the second exemplary embodiment of a decoder 100 has a compression decoder 104b and a source identifier 106b. This embodiment of decoder 100 is suitable for use where only the primary video signal is to be decoded from the bit stream 98. This situation may arise, for example if the compression decoder 104b is not sufficiently powerful to process the received bit stream 98, which has a picture rate double the picture rate of the original video signal. It is envisaged that existing decoders that are not sufficiently powerful to decode both primary and secondary video signals from the received bit stream 98 may be relatively simply upgraded to operate in accordance with this embodiment to ensure backward compatibility with existing decoders.

As can be seen from Figure 12, the compression decoder 104a comprises a picture parser 146; an entropy decoder ED 34 coupled to the picture parser 146 to receive successive portions of the compressed bit stream from the picture parser 146; an inverse transform block TQ⁻¹ 36 coupled to the entropy decoder 34; a motion compensator 38; and a decoded picture buffer 40. Generally the compression decoder 104a also has buffer output control (not shown explicitly) for controlling the reading out of decoded video signals from the decoded picture buffer 40, as will be understood by a skilled person. The decoder 100 also has a source identifier 106b coupled to receive information from the picture parser 146, to provide instructions to the picture parser 146.

Components of the compression decoder that are the same or similar to the components of the compression coder shown in Figure 2 have been given the same reference numerals. These components are arranged in the same way as in the coder shown in Figure 2 and operate substantially in the same way as corresponding components in Figure 2.

The picture parser 146 shown in Figure 12 corresponds in its basic functions with the corresponding blocks shown in Figure 2.

However, as the bit stream 98 is received by picture parser 146 and segmented into portions relating to each picture prior to compression decoding, information relating to whether the received compressed picture is a primary picture or a secondary picture is passed by the picture parser 146 to the source identifier 106b.

In some embodiments, the information relating to whether the received compressed picture is a primary picture or a secondary picture can be provided by the picture source identity inserted in the single compressed bit stream by the formatter function 130 of the coder 90. In other embodiments in which the single compressed bit stream does not contain any explicit indication of primary or secondary picture source, the picture parser 138 can inform the source identifier of, for example, the picture types of the received compressed pictures. In embodiments such as illustrated in Figure 4b where primary pictures are coded without reference to secondary pictures, or all the secondary pictures bi-directionally coded with primary picture references, the source identifier 106a is able to identify primary pictures and secondary pictures from the pattern of picture types and/or from the reference pictures used for each prediction coded picture in the received compressed video signal.

In this exemplary embodiment, the source identifier 106b identifies secondary compressed pictures. In response to the identification of the secondary compressed pictures the picture parser 146 skips the compressed secondary pictures received as part of the compressed bit stream 98 and passes only the primary compressed pictures to the entropy decoder 34 for further compression decoding. The skipping of received compressed pictures without compression decoding is supported in many existing decoders, and therefore it is envisaged that existing decoders could easily be upgraded to include this feature.

In this exemplary embodiment the primary pictures have all been compression coded without reference to the secondary pictures. Thus the removal of the secondary compressed pictures from the compressed bit stream prior to compression decoding has no effect on the ability of the compression decoder 104b to decode the primary pictures 158 and store them in the decoded picture buffer 40. The primary compression decoded video signal 108 can then be read out of the decoded picture buffer.

The use of the alternating primary picture and secondary picture structure for the combined video signal to which compression coding is applied ensures that the primary and secondary video signals remain synchronised with each other.

A single compression coder is required to compression code the combined video signal to form a single bit stream. In addition, a single transmission channel is required to transmit the compression coded bit stream to the compression decoder and a single compression decoder is required to compression decode the single bit stream. Moreover, the basic architecture of the compression coder and the compression decoder of the described embodiments is very similar to existing compression coders and compression decoders and therefore embodiments of the compression coder and the compression decoder may be implemented in existing systems without significant alteration to the existing compression coders and compression decoders already deployed.

In addition the compression of a combined video signal 54, comprising both primary and secondary pictures, enables redundancies between the primary and secondary video signals to be exploited fully. Therefore it can be expected that even though the picture rate of the combined video signal is twice the picture rate of the primary video signal or the secondary video signal, the bit rate of the resulting compression coded bit stream 98 is will be less than twice the bit rate of a bit stream resulting from the compression coding of the primary video signal or the secondary video signal.

Embodiments in which the secondary pictures are not used as reference pictures during the compression coding of primary pictures, make it possible for a compression decoder to skip the received secondary pictures and compression decode only the primary pictures from the received compressed bit stream. This feature enables an existing decoder to decode the combined video signal bit stream, with only a minor alteration to the existing decoder. The modifications to existing compression decoders required to make existing compression decoders compatible with the disclosed systems are easily implemented. Typically, this upgrade would be implemented by upgrading software providing the compression decoding function.

In the exemplary embodiments, secondary pictures from a single secondary signal are combined with primary pictures from the primary video signal to form a combined video signal in which primary pictures alternate with secondary pictures. This embodiment is likely to be the most common embodiment since two video signals are involved in stereoscopic or 3DTV systems. However, embodiments in which more than one secondary video signal is to be combined with a primary video signal can also be envisaged, as will be apparent to a skilled person. In these embodiments a picture from the primary video signal and a picture from each of the secondary video signals in turn are selected in a successive manner such that the combined video signal comprises pictures from the primary video signal P and one or more secondary video signals S₁..Sₙ alternately in the sequence P; S₁; ..Sₙ.

The compression coder and the compression decoder may be implemented using computer-implemented instructions running on a suitable processor, or in hardware, in a combination of hardware and software as seems appropriate to a skilled person.

A machine-readable medium having stored thereon instructions which cause a processor to perform a method of compression coding of a primary video signal and at least one secondary video signal in accordance with embodiments of the invention is also provided.

A machine-readable medium having stored thereon instructions which cause a processor to perform a method of compression decoding a compressed bit stream in accordance with embodiments of the invention is also provided.

Although the different elements of the compression coder and compression decoder have been described as being performed by different elements, the distribution of functions within the compression coder or the compression decoder can be varied in different embodiments, as will be apparent to a skilled person.

In addition, as discussed with respect to Figures 5a and 5b, in some embodiments the primary video signal and/or a secondary video signal is an interlaced video signal, and as a result the primary and/or secondary pictures are field pairs. In such embodiments the fields of the or each interlaced video signal must be combined in an initial step to form field pair pictures. In some embodiments, one field of a field pair picture may be coded with reference to the other field of the field pair picture.

There is also provided a coder for compression coding a primary video signal and at least one secondary video signal, comprising: a combiner for combining primary pictures, from the primary video signal, and secondary pictures, from the secondary video signal(s) to form a combined video signal comprising an alternating sequence of pictures from the primary video signal and from the or each of the secondary video signal(s); and a compression coder arranged to receive the combined video signal from the combiner to compression code the combined video signal to form a single bit stream; wherein the combiner also comprises a picture indicator for generating a picture source indication to the compression coder wherein the compression coder uses the picture source indication for a picture in determining the compression coding applied to the picture.

The compression coder may further comprise a compression decision function arranged to receive the picture source indication and to use the picture source indication for a picture in determining the picture type allocated to the picture for compression coding.

The compression coder may comprise a compression decision function arranged to receive the picture source indication and to use the picture source indication for a picture to determine the reference pictures selected for motion-compensated compression coding of that picture.

The compression decision function may select only pictures identified as primary pictures by the picture source indication as reference picture for pictures identified as primary pictures by the picture source indication.

The compression coder may comprise a motion estimation function arranged to receive the picture source indication and to use the picture source indication for a picture in selecting motion vectors for motion-compensated compression coding of at least a portion of a picture.

The compression coder may comprise a mode decision function arranged to receive the picture source indication and to use the picture source indication for a picture in determining the compression mode of at least a portion of the picture.

The coder may further comprise a format function arranged to receive the picture source indication and to insert a picture source identity, indicating whether a compressed picture is a primary picture or a secondary picture, in the single compressed bit stream.

There is also provided a decoder for compression decoding a compressed bit stream comprising a plurality of compressed video pictures, wherein each of the compressed video pictures is a primary picture from a primary video signal or a secondary picture from one or more secondary video signal(s), the pictures from the primary video signal and the or all of the secondary video signal(s) being in an alternating sequence in picture display order of the received compressed bit stream, wherein the compression decoder comprises: source identifier for identifying received compressed pictures of the received bit stream as primary picture or secondary picture; and compression decoder, coupled to the source identifier, for compression decoding received compressed pictures dependent upon the identification of the received compressed picture as a primary picture or a secondary picture; and wherein the compression decoder compression decodes all pictures of the received compressed bit stream; and wherein the decoder also comprises a output control function, arranged to receive picture source information from the source identifier, and to separate the compression decoded pictures into a primary decoded video signal and the one or more secondary decoded video signal(s) depending on the picture source identified for each picture.

The compression decoder may be arranged to discard compressed secondary picture information from the received compressed bit stream prior to compression decoding in response to picture source information identified by the source identifier.

The source identifier may be arranged to obtain picture source identity information from the compressed bit stream.

## Claims

1. A method of compression coding a primary video signal and at least one secondary video signal, comprising the steps:
combining primary pictures from the primary video signal, and secondary pictures from the secondary video signal(s), to form a combined video signal comprising an alternating sequence of pictures from the primary video signal and from the or each of the secondary video signal(s); and
compression coding the combined video signal to form a single compressed bit stream.

2. The method as claimed in claim 1 also comprising the step of supplying a picture source indication to the compression coder wherein in the step of compression coding the combined video signal, the picture source indication for a picture is used in determining the compression coding applied to the picture.

3. The method as claimed in claim 2 where in the step of compression coding the combined video signal, the picture source indication for a picture is used in determining the picture type allocated to the picture for compression coding.

4. The method as claimed in claim 2 or 3 where in the step of compression coding the combined video signal, the picture source indication for a picture is used in a step of determining the reference pictures selected for motion-compensated compression coding.

5. The method as claimed in one of claims 2-4 where in the step of compression coding the combined video signal, the picture source indication for a picture is used in a step of selecting motion vectors for motion-compensated compression coding of at least a portion of a picture.

6. The method as claimed in one of claims 2-5 wherein in the step of compression coding the combined video signal, the picture source information for a picture is used in a step of determining the compression mode of at least a portion of the picture.

7. The method as claimed in one of claims 2-6 wherein in the step of compression coding the combined video signal, pictures identified by the picture source indication as primary pictures are compression coded without reference to pictures identified by the picture source indication as secondary pictures.

8. The method as claimed in any preceding claim further comprising the step of inserting a picture source identity, indicating whether a compressed picture is a primary picture or a secondary picture, in the single compressed bit stream.

9. A coder for compression coding a primary video signal and at least one secondary video signal, comprising
a combiner for combining primary pictures, from the primary video signal, and secondary pictures, from the secondary video signal(s) to form a combined video signal comprising an alternating sequence of pictures from the primary video signal and from the or each of the secondary video signal(s); and
a compression coder arranged to receive the combined video signal from the combiner to compression code the combined video signal to form a single bit stream.

10. A method of compression decoding a compressed bit stream comprising a plurality of compressed video pictures,
wherein each of the compressed video pictures is a primary picture from a primary video signal or a secondary picture from one or more secondary video signal(s), the pictures from the primary video signal and the or all of the secondary video signal(s) being in an alternating sequence in picture display order of the received compressed bit steam,
wherein the compression decoding method comprises the steps:
identifying received compressed pictures as a primary picture or a secondary picture, and
compression decoding received compressed pictures dependent upon the identification of the received compressed picture as a primary picture or a secondary picture.

11. The method as claimed in claim 17 wherein the step of compression decoding further comprises the steps:
compression decoding the received compressed bit stream; and
separating the compression decoded pictures into a primary video signal and the one or more secondary video signal(s) depending on the picture source identified for each compressed picture.

12. The method as claimed in claim 17 further comprising the step of discarding compressed secondary picture information from the received compressed bit stream prior to compression decoding.

13. The method as claimed in one of claims 17-19, in which the step of identifying the source of received compressed pictures comprises the step of extracting picture source identity information from the compressed bit stream.

14. A decoder for compression decoding a compressed bit stream comprising a plurality of compressed video pictures,
wherein each of the compressed video pictures is a primary picture from a primary video signal or a secondary picture from one or more secondary video signal(s), the pictures from the primary video signal and the or all of the secondary video signal(s) being in an alternating sequence in picture display order of the received compressed bit stream,
wherein the compression decoder comprises:
source identifier for identifying received compressed pictures of the received bit stream as primary picture or secondary picture; and
compression decoder, coupled to the source identifier, for compression decoding received compressed pictures dependent upon the identification of the received compressed picture as a primary picture or a secondary picture
